# EUROPEAN PATENT APPLICATION

(11) **EP 4 613 622 A1**
(43) Date of publication of application: **10.09.2025**
(21) Application number: 24425007.2
(22) Date of filing: 06.03.2024
(51) Int. Cl.: B62M 6/65, B62M 11/16, B62M 11/02, F16H 1/28, H02K 7/116

(54) **DRIVING DEVICE FOR AN ELECTRIC BICYCLE AND ELECTRIC BICYCLE**

(71) Applicant: Porsche eBike Performance GmbH, 85521 Ottobrunn (DE)
(72) Inventor: Casali, Ezio, 25050 Rodengo Saiano (BS) (IT)
(74) Representative: Völkl Siebenson Patentanwälte - Partnerschaft mbB

(57) **Abstract**

A driving device (10) for an electric bicycle (1) comprises a support shaft structure (11, 12) surrounding an axis of rotation (R) of the driving device (10), and a motor unit having an electric motor (13, 15) for driving the electric bicycle (1), wherein the motor unit is coupled on the support shaft structure (11, 12). The driving device further includes a planetary gear box (25) which is configured to drive the electric bicycle (1) and which is coupled on the one hand to the motor unit and on the other hand to a support shaft structure (11, 12) and configured to deliver a torque for driving the electric bicycle (1). The planetary gear box (25) comprises an outer ring gear element (17, 19) and an inner planetary carrier (24) with respect to the axis of rotation (R). The planetary gear box (25) further includes only one planetary gear (18) arranged between and being in engaging contact with the outer ring gear element (17, 19) and the inner planetary carrier (24).

## Description

The invention relates to a sensor unit for a drive device for an electric bicycle. The invention further relates to a drive device and an electric bicycle with such a sensor unit.

Bicycles are inexpensive, easy to handle and enable emission-free transport. They have also found widespread use as sports or fitness equipment, and particularly suitable types have emerged for various fields of application.

In recent years, there has been growing enthusiasm for electric bicycles, especially so-called "pedelecs", despite their high weight and price for bicycles. Potential customers are not only older cyclists who are less fit or free of sporting ambitions, but also sporty, younger riders, whether for use on the way to work or because of the possibility of using them to extend the radius of action and/or increase the speed of travel without overstraining one's own physique. Among mountain bikers in particular, interest in electrically assisted mountain bikes seems to be growing. In the case of electric bicycles, it is a challenge to provide a reliably assisting drive system that allows high power transmission with low losses.

It is an object underlying the invention to provide a reliable driving device for electric bicycles, which enables a clear structure and also contributes to a high power transmission with low losses.

According to one aspect, a driving device for an electric bicycle comprises a support shaft structure surrounding an axis of rotation of the driving device, and a motor unit having an electric motor for driving the electric bicycle. The motor unit is coupled to the support shaft structure. The driving device further comprises a planetary gear box which is configured to drive the electric bicycle and which is coupled on the one hand to the motor unit and on the other hand to the support shaft structure. The planetary gear box is configured to deliver a torque for driving the electric bicycle, wherein it includes one or more outer ring gear elements and an inner planetary carrier with respect to the axis of rotation. The planetary gear box further includes only one planetary gear that is arranged between the outer ring gear element and the inner planetary carrier and that is in an engaging contact with the outer ring gear element and the inner planetary carrier.

By means of the described driving device, a clear and slim design of a drive unit can be realised, which forms a reliable drive concept for electric bicycles and in particular enables an efficient wheel hub drive that contributes to a high power transmission and low losses.

According to an embodiment of the driving device, the planetary gear box comprises a further outer ring gear element that surrounds the one planetary gear and that is in an engaging contact with the one planetary gear. The planetary gear box of the driving device may preferably realize a Wolfrom-planetary gear unit with two ring or hollow gear wheels with a continuous gear toothing each.

According to a further embodiment of the driving device, the outer ring gear elements each have a predetermined number of teeth which differs from each other by one or two.

According to a further embodiment, the driving device comprises a motor housing that surrounds the motor unit, the motor unit, the planetary gear box and the support shaft structure. One of the outer ring gear elements is fixed to the motor housing and the other ring gear element is configured to be rotatable relative to the motor housing around the axis of rotation.

According to a further embodiment of the driving device, the one planetary gear comprises a radius of 20 mm or less.

The only one planetary gear allows for a reduced dimensioning of the planetary gear box compared to conventional systems including three, four or more gear elements, for example. Due to the reduced dimensions and the clear structure with few elements, a weight of the driving device is feasible.

According to a further embodiment of the driving device, the planetary gear box is made of or comprises ergal or duralalumin. Such materials allows for a beneficial stability of the driving device, in particular in combination with one planetary gear, merely. Preferably, one or more components of the planetary gear box comprises a fluoropolymer coating configured to provide predetermined non-stick properties and sliding properties. Such a coating can be a Tempcoat^{®} coating. Additionally or alternatively, the one or more components of the planetary gear box can be processed by means of anodizing. Such material and/or material processing contributes to a very stable and efficient driving unit with only one planetary gear.

According to a further embodiment of the driving device, the motor unit and the respective outer ring gear element and the planetary carrier are arranged coaxially around the support shaft structure with respect to the axis of rotation.

According to a further aspect, an electric bicycle is disclosed comprising a bicycle frame extending to a bottom bracket and a bicycle hub. The electric bicycle further comprises a driving device according to one of the embodiments described above, which is arranged in or on the bicycle hub so that a torque for driving the electric bicycle is transmittable by means of the transmission.

In that the electric bicycle comprises an embodiment of the driving device as described above, the properties and features described in connection with the driving device are also disclosed for the electric bicycle and vice versa. The electric bicycle substantially enables the aforementioned features, benefits and functions. For example, for attachment to the bicycle hub and optionally to a frame portion of the electric bicycle, the frame portion has a recess so that the driving device can be reliably received. According to one embodiment, the driving device is arranged, for example as an assembly in the already coupled state on the bicycle hub, in particular mounted, or forms this.

Preferably, the motor unit is formed as an electric motor comprising a stator and a rotor. The motor unit can comprise a magnet asynchronous machine with an internal rotor with 2.2 Nm nominal torque and 4 Nm peak torque, for example. The motor unit can be formed as a brushless motor with 10 poles 48 volts of direct current and 3300 rpm, and a gearbox with a ratio of 1:30 on low speed shaft 110 rpm and 65 Nm nominal and 120 Nm peak driving a free pulley which creates a reduction ratio with a difference of one or two teeth.

The planetary gear box can be formed including a crown wheel and a toothed pulley with a ratio of 1:30. A mobile crown wheel is configured to rotate by the difference of two teeth, for example, transmitting the reduced rotation from the main pulley to the secondary.

Such a motor unit and planetary gear box with only one planetary gear and a nominal torque of 65 Nm and a peak torque of 120 Nm at 110 rpm enables a transmission efficiency up to 90% with respect to typical use case. The one planetary wheel realizes one free wheel and the function of a second gear wheel is performed by one unidirectional cartridge bearing where a crankset with dedicated fixing, e.g. mechanical key or other, is fixed.

Due to the described configurations, the driving unit allows for an improved efficiency and a reduced total weight. Moreover, a relative high transmission ratio with few elements is feasible with the described embodiments.

Embodiments, advantages and functions are explained in the following description with the aid of the attached drawings. The figures show:
Figure 1 a schematic view of an electric bicycle with a mounted driving device,
Figures 2-4 an embodiment of the driving device for the electric bicycle in different views.

Identical, similar or similarly acting elements are provided with the same reference signs in the figures. For reasons of clarity, not all elements shown in all figures are marked with the corresponding reference signs.

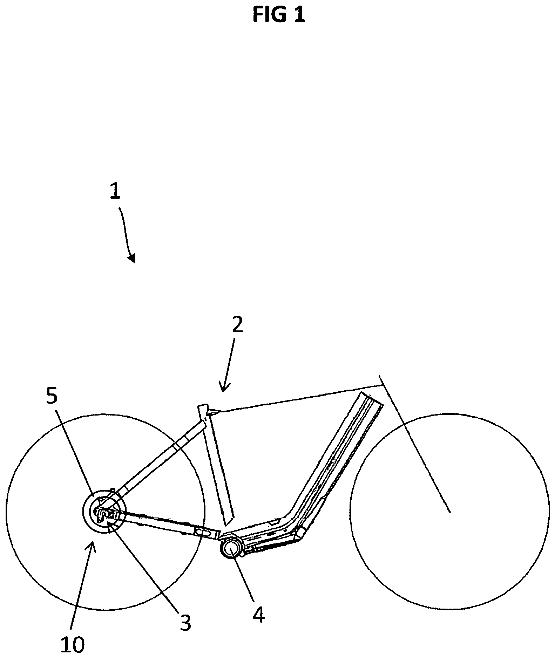

Figure 1 schematically shows an electric bicycle 1 with a bicycle frame 2, which extends in the direction of a bottom bracket 4, and in the direction of a rear bicycle hub 3. The electric bicycle 1 can further comprise a braking element at the rear bicycle hub 3. The bicycle hub 3 is coupled or can be coupled to an electric driving device 10 for the electric bicycle 1.

Terms such as "front", "rear", "top", "bottom", "right", "left", "outside" and "inside" refer to orientations or alignments of respective components as illustrated in the figures and as arranged in an operational state of the electric bicycle 1. The electric bicycle 1 generally has a front wheel and a rear wheel. An outer area refers to an area outside the electric bicycle 1 or outside the driving device 10 or a motor housing 14. The drive device 10 may also be referred to as a rear wheel hub drive and is integrated into or arranged on the rear bicycle hub 3 and transmits a provided drive force to the bicycle hub 3 almost without loss. The running wheels of the electric bicycle 1 are set in motion directly by the driving device 10, so that a high degree of efficiency can be achieved by means of the rear wheel hub drive to assist a rider of the electric bicycle 1.

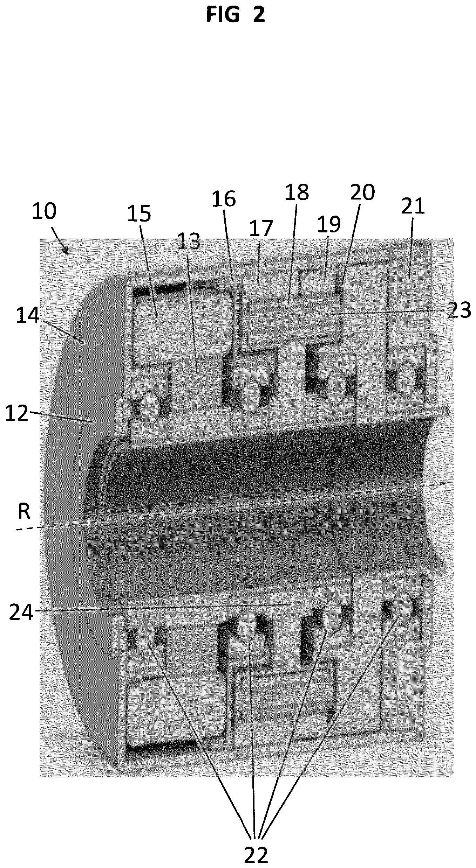

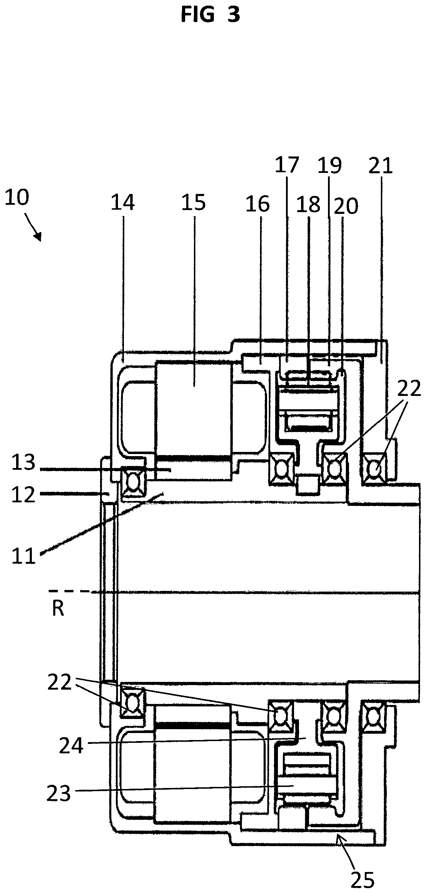

As explained in the following embodiments and in Figures 2-4, the driving device 10 enables a drive concept for electric bicycles that has a clear and space-saving structure and also contributes to a high power transmission with low losses.

Figure 2 shows an embodiment of the driving device 10 for the electric bicycle 1 in a perspective view. The driving device 10 comprises a support shaft structure with a support shaft 11 and a shaft flange 12 each surrounding an axis of rotation R of the driving device 10. The driving device 10 further includes a motor unit having an electric motor with a rotor 13 and a stator 15 for driving the electric bicycle 1. The motor unit is coupled to the support shaft structure 11, 12 such that the outer stator 15 surrounds the inner rotor 13 and such that both are arranged coaxially around the support shaft 11 with respect to the axis of rotation R.

The driving device 10 further comprises a planetary gear box 25 which is configured to drive the electric bicycle 1 and which is coupled on the one hand to the motor unit and on the other hand to the support shaft structure 11, 12. The planetary gear box 25 is configured to deliver a torque for driving the electric bicycle 1, wherein the planetary gear box 25 includes two outer ring gear elements 17 and 19 and an inner planetary carrier 24 with respect to the axis of rotation R. The planetary gear box 25 further includes only one planetary gear 18 that is arranged between the outer ring gear elements 17, 19 and the inner planetary carrier 24 and that is in engaging contact with the outer ring gear elements 17, 19 and the inner planetary carrier 24 by means of respective interlocking teeth structure.

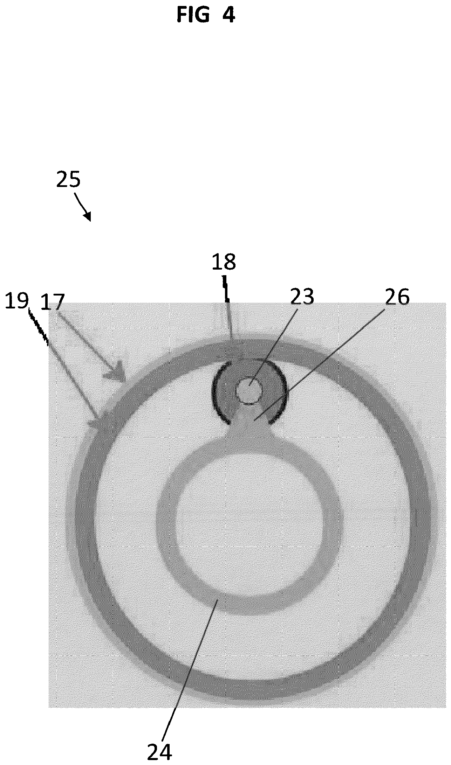

The motor unit, the planetary gear box 25 and the support shaft structure 11, 12 are arranged in the motor housing 14 and the outer ring gear element 19 is fixed relative to the motor housing 14 and the other ring gear element 17 is configured to be rotatable relative to the motor housing 14 around the axis of rotation R. The planetary gear box 25 realizes a Wolfrom-planetary wheel system. The gear elements of the planetary gear box 25 each comprises a predetermined number of interacting teeth (see also Fig. 4). For instances, the outer ring gear elements 17, 19 each have a number of teeth which differs from each other by one or two. The outer ring gear elements 17, 19 are arranged adjacent to each other along the axis of rotation R and both are in interlocking contact with the one planetary gear 18 which in turn is engaged with the planetary carrier 24 via a coupling element 26 realized by a tooth structure, for example.

During operation of the driving device 10, the electric motor 13, 15 drives the planetary carrier 24 which in turn rotates the one planetary gear 18 such that one planetary gear 18 rotates around the planetary carrier 24 in a hollow ring space between the ring gear elements 17, 19 and the planetary carrier 24. The one planetary gear 18 rotates due to the engaging contact with the fixed ring gear element 19 and in turn rotates the mobile ring gear element 17 providing transmission torque for supporting a rider of the electric bicycle 1.

A holding pin 23 realizes a support structure for the one planetary gear 18. Moreover, the motor housing 14 is closed at opposite sides with respect to the axis of rotation R by means of a locking flange 21 and the shaft flange 12. The electric motor 13, 15 is closed or separated inside the motor housing 14 by means of a motor flange 16. Moreover, there is a gear box bearing 20 arranged between the one planetary gear 18 and the ring gear element 19 with respect to the axis of rotation R. Furthermore, there are bearings 22 arranged between the support shaft 11 and outer elements of the driving device 10 such that some components are fixed and others are rotatable.

By means of the driving device 10, a particularly space-saving and narrow drive concept can be provided, which also enables efficient power transmission due to the clear structure and the only one planetary gear 18, in particular. The driving device 10 is particularly suitable for mounting on the rear bicycle hub 3 and enables an advantageous drive system, particularly with regard to high efficiency and low losses. Alternatively or additionally, such a driving device 10 can be mounted on a front bicycle hub.

### Reference signs

- 1: electric bicycle
- 2: bicycle frame
- 3: bicycle hub
- 4: bottom bracket
- 5: braking element
- 10: driving device
- 11: support shaft
- 12: shaft flange
- 13: rotor
- 14: motor housing
- 15: stator
- 16: motor flange
- 17: first ring gear element
- 18: planetary gear
- 19: second ring gear element
- 20: gearbox bearing
- 21: locking flange
- 22: bearing
- 23: holding pin
- 24: planetary carrier
- 25: planetary gear box
- 26: coupling element

- R: axis of rotation of the driving device

## Claims

1. A driving device (10) for an electric bicycle (1), comprising:
- a support shaft structure (11, 12) surrounding an axis of rotation (R) of the driving device (10),
- a motor unit having an electric motor (13, 15) for driving the electric bicycle (1), wherein the motor unit is coupled to the support shaft structure (11, 12), and
- a planetary gear box (25) which is configured to drive the electric bicycle (1) and which is coupled on the one hand to the motor unit and on the other hand to the support shaft structure (11, 12) and configured to deliver a torque for driving the electric bicycle (1), wherein the planetary gear box (25) includes an outer ring gear element (17, 19) and an inner planetary carrier (24) with respect to the axis of rotation (R), and wherein the planetary gear box (25) further includes only one planetary gear (18) arranged between and being in engaging contact with the outer ring gear element (17, 19) and the inner planetary carrier (24).

2. The driving device (10) according to claim 1, wherein the planetary gear box (25) comprises a further outer ring gear element (17, 19) surrounding and being in engaging contact with the one planetary gear (18).

3. The driving device (10) according to claim 2, wherein the outer ring gear elements (17, 19) each have a predetermined number of teeth which differs from each other by one or two.

4. The driving device (10) according to claim 2 or 3, comprising:
a motor housing (14) surrounding the motor unit, the planetary gear box (25) and the support shaft structure (11, 12), wherein one of the outer ring gear elements (17, 19) is fixed to the motor housing (14) and the other ring gear element (17, 19) is configured rotatable relative to the motor housing (14) around the axis of rotation (R).

5. The driving device (10) according to one of the preceding claims, wherein the one planetary gear (18) comprises a radius of 20 mm or less.

6. The driving device (10) according to one of the preceding claims, wherein the planetary gear box (25) is made of or comprises ergal or duralalumin.

7. The driving device (10) according to one of the preceding claims, wherein the planetary gear box (25) comprises a fluoropolymer coating configured to provide predetermined non-stick properties and sliding properties.

8. The driving device (10) according to one of the preceding claims, wherein the motor unit and the respective outer ring gear element (17, 19) and the planetary carrier (24) are arranged coaxially around the support shaft structure (11, 12) with respect to the axis of rotation (R).

9. Electric bicycle (1), comprising:
- a bicycle frame (2) extending to a bottom bracket (4) and to a bicycle hub (3); and
- a driving device (5) according to any one of preceding claims coupled to the bicycle hub (3) for driving the electric bicycle (1).
